# NEUE EUROPÄISCHE PATENTSCHRIFT

(11) **EP 2 986 479 B2**
(45) Veröffentlichungstag und Bekanntmachung des Hinweises auf die Entscheidung über den Einspruch: **25.12.2019**
(45) Hinweis auf die Patenterteilung: 07.06.2017
(21) Anmeldenummer: 14719268.6
(22) Anmeldetag: 16.04.2014
(51) Int. Cl.: B60W 30/18, B60W 10/02, B60W 10/10, B60W 50/08

(54) **VERFAHREN ZUM BETREIBEN EINES ANTRIEBSSTRANGS EINES KRAFTFAHRZEUGS**
METHOD FOR OPERATING A DRIVE TRAIN OF A MOTOR VEHICLE
PROCÉDÉ DE FONCTIONNEMENT D'UN TRAIN DE TRANSMISSION D'UN VEHICULE

(30) Priorität: 18.04.2013 DE 102013207015
(43) Veröffentlichungstag der Anmeldung: 24.02.2016
(73) Patentinhaber: Bayerische Motoren Werke Aktiengesellschaft, 80809 München (DE)
(72) Erfinder: PASENAU, Thiemo, 81539 München (DE)
(86) Internationale Anmeldenummer: PCT/EP2014/057825
(87) Internationale Veröffentlichungsnummer: WO 2014/170408

(56) Entgegenhaltungen:
- DE-A1-102008 042 959
- DE-A1-102009 045 091

## Beschreibung

Die Erfindung betrifft ein Verfahren zum Betreiben eines Antriebsstrangs eines Kraftfahrzeugs nach Anspruch 1, wobei der Antriebsstrang einen Antriebsmotor und ein zwischen dem Antriebsmotor und den Antriebsrädern geschaltetes automatisches oder automatisiertes Getriebe umfasst.

Derzeit können Fahrzeuge, die mit einem Automatikgetriebe oder einem automatisierten Getriebe ausgestattet sind, meist in zumindest zwei unterschiedlichen Getriebebetriebsarten betrieben werden. Schaltet der Fahrer in die D-Getriebeposition, erfolgt die Getriebesteuerung in einer ersten Betriebsart (= Automatikbetrieb) vollkommen automatisch, d. h. die Getriebesteuerung wählt anhand ausgewerteter Fahrzeugparameter den für den aktuellen Betriebszustand optimalen Getriebegang selbstständig aus und wechselt in diesen. Neben diesem Automatikbetrieb kann der Fahrer durch entsprechende Bedienung des Getriebehebels in einen Manuellbetrieb wechseln, bei dem ein Zurückschalten oder Hochschalten in der Regel nur dann erfolgt, wenn der Fahrer mittels eines dafür vorgesehen Bedienelements eine Hochschaltung oder Zurückschaltung (z. B. Wählhebel nach vorne oder nach hinten drücken) anfordert. Alternativ kann der Automatikbetrieb auch durch eine Betätigung eines meist in der Nähe des Lenkrads angeordneten Bedienelements, durch das der Fahrer eine Hochschaltung oder Rückschaltung anfordern kann, verlassen und in den Manuellbetrieb mit entsprechend angeforderten Gang gewechselt werden. Ein derartiges sog. Automatikgetriebe mit Steptronic ist bspw. aus der aktuellen BMW 5er Serie bekannt.

Weiter ist bekannt, dass Kraftfahrzeuge sehr wenig Treibstoff verbrauchen, wenn sie "segeln", d. h. wenn sie ihre kinetische Energie nützen, um möglichst weit zu rollen, ohne dass das Schleppmoment des Motors sie bremst.

Aus der DE 10 2009 057 551 A1 ist bereits ein Verfahren zum Betreiben eines Antriebsstrang in einem Kraftfahrzeug bekannt, wobei der Verbrennungsmotor bei Vorliegen vorbestimmter Betriebsbedingungen bei fahrendem Fahrzeug von den Antriebsrändern abgekoppelt wird, also in einem Segelbetrieb bzw. Segelmodus übergegangen wird.

Aus der DE 10 2009 045 091 A1 ist ein Verfahren zum Steuern und/oder Regeln eines automatisierten Getriebes mit Rollfunktion bekannt. Aus der DE 10 2008 042 959 A1 ist ein ähnliches Verfahren bekannt, wobei hier eine zweimalige Betätigung des Gangschalters in dieselbe Schaltrichtung innerhalb einer bestimmten Zeit notwendig ist, um den Segelmodus zu verlassen.

Schließlich befinden sich bereits Fahrzeuge mit Automatikgetriebe auf dem Markt, wobei das Automatikgetriebe in einem Automatikbetrieb oder einem Normalbetrieb betrieben werden kann, und wobei im Automatikbetrieb des Getriebes bei Vorliegen definierter Betriebsbedingungen in einem Segelmodus des Antriebsstrangs geschaltet wird, in dem die Wirkverbindung zwischen Verbrennungsmotor und Antriebsrädern getrennt ist. Erfolgt während des Segelmodus eine manuelle Hochschalt- oder Zurückschaltanforderung durch den Fahrer mittels dafür vorgesehener Bedienelemente wird der Segelmodus verlassen und in den Normalbetrieb des Antriebsstrangs gewechselt, d. h. die Wirkverbindung zwischen Verbrennungsmotor und Antriebsrädern wird wieder hergestellt.

Aufgabe der Erfindung ist nun, ein hinsichtlich des Komforts verbessertes Verfahren zum Betreiben eines Antriebsstrangs eines Fahrzeugs mit Automatikgetriebe oder automatisiertem Getriebe anzugeben, welches unter bestimmten Voraussetzungen in einem Segelmodus betrieben werden kann.

Diese Aufgabe wird durch ein Verfahren nach Patentanspruch 1 gelöst. Vorteilhafte Weiterbildungen ergeben sich aus den abhängigen Ansprüchen. Das erfindungsgemäße Verfahren, sowie deren vorteilhafte Ausgestaltungen können mittels eines implementierten Algorithmus oder einer entsprechenden Baugruppenanordnung in einer dafür vorgesehenen Steuervorrichtung, z. B. in einer Getriebesteuervorrichtung, durchgeführt werden.

Bei der Erfindung wird davon ausgegangen, dass das Fahrzeug ein zwischen dem Antriebsmotor und den Antriebsrädern geschaltetes automatisches oder automatisiertes Getriebe umfasst, und das Getriebe sowohl in einem Automatikbetrieb, bei dem der Gang automatisch, also fahrerunabhängig gewechselt wird, und in einem Manuellbetrieb, bei dem in Abhängigkeit einer vom Fahrer mittels eines Bedienelements angeforderten Hochschaltung oder Zurückschaltung in einen höheren oder niedrigeren Gang gewechselt wird, betrieben werden kann. Weiter ist das Verfahren zum Betreiben des Antriebsstrangs des Fahrzeugs grundsätzlich derart ausgestaltet, dass zumindest im Automatikbetrieb des Getriebes bei Vorliegen definierter Betriebsbedingungen (z. B. es ist weder das Gaspedal noch das Bremspedal betätigt) automatisch in einen Segelmodus geschaltet wird, in dem die Wirkverbindung zwischen Antriebsrädern und Antriebsmotor aufgetrennt ist. Dies kann dadurch erfolgen, dass im Segelmodus eine die Antriebsräder mit dem Antriebsmotor verbindende automatische oder automatisierte Kupplung geöffnet wird und/oder das Getriebe in eine Neutralstellung geschaltet wird. Als automatisierte Kupplung sind hier alle Kupplungen (bzw. Schaltübertragungsmechanismen) des (Automatik-) Getriebes zu verstehen, die zum Einlegen der einzelnen Gänge erforderlich sind und den Antriebsmotor mit dem Getriebeausgang derart verbinden, dass ein Kraftschluss zwischen Antriebsaggregat und Antriebsrädern vorliegt. Zusätzlich kann der Antriebsmotor während des Segelmodus abgeschaltet werden.

Grundsätzlich kann ein Segelmodus auch nur dann zugelassen werden, wenn der Fahrer eine vorgegebene, bspw. besonders energieeffiziente Fahrweise wünscht. Dieser Wunsch nach einer energieeffizienten Fahrweise kann durch Auswertung des Fahrerverhaltens oder des Fahrzeugverhaltens oder durch Auswertung bzw. Erkennen eines vom Fahrer auswählbaren Betriebsmodus (z. B. ECO-Modus) erkannt werden.

Der Segelmodus wird in der Regel dann verlassen, wenn der Fahrer das Gaspedal (oder das Bremspedal) zumindest in einem bestimmten Maße betätigt. Ebenso wird der Segelmodus dann verlassen, wenn der Fahrer ein zum Zurückschalten der Getriebestufe im Manuellbetrieb vorgesehenes Bedienelement betätigt.

Betätigt der Fahrer im Segelmodus jedoch ein zum Hochschalten der Getriebestufe im Manuellbetrieb vorgesehenes Bedienelement in entsprechender Weise, kann daraus abgeleitet werden, dass der Fahrer zu diesem Zeitpunkt zumindest keine Verzögerung des Fahrzeugs wünscht. Da eine Beendigung des Segelmodus in der Regel jedoch mit einer - wenn auch nur geringfügigen - Verzögerung des Fahrzeugs aufgrund des Schleppmoments einhergeht, sieht das erfindungsgemäße Verfahren vor, dass bei einer vom Fahrer angeforderten Hochschaltung während des Segelmodus der Segelmodus des Antriebsstrang trotzdem aufrechterhalten bleibt (wenn keine sonstige Segelmodus-Ausstiegsbedingung erfüllt ist), d. h. die Hochschaltanforderung wirkt nicht auf die Steuerung des Getriebes bzw. des Antriebsstrangs aus.

Vorteilhafterweise bleibt bei einer vom Fahrer angeforderten Hochschaltung während des Segelmodus der Segelmodus im Automatikbetrieb dann aufrechterhalten, wenn die Hochschaltung mittels eines im Bereich des Lenkrads angeordneten Bedienelements, insbesondere einer dort angeordneten Schaltwippe erfolgt. Wechselt der Fahrer hingegeben mittels Betätigung des Getriebewählhebels durch entsprechende Betätigung in den Manuellbetrieb und fordert dabei auch eine Hochschaltung an, so kann entsprechend der Anforderung hierbei direkt der Segelmodus verlassen und in den Manuellbetrieb (inkl. einer Hochschaltung) gewechselt werden. Somit hat der Fahrer die Möglichkeit, durch eine entsprechende Betätigung eines Bedienelements den Segelmodus aktiv zu verlassen und einen Hochschaltvorgang auszuführen, wenn er dies wünscht.

Um dem Fahrer darüber zu informieren, dass sein Hochschaltwunsch zwar erkannt, dieser aber aufgrund des vorliegenden Segelmodus nicht ausgeführt wird, wird bei einer angeforderten Hochschaltung während des Segelmodus und einem Verbleib im Segelmodus zumindest für ein vorgegebenes Zeitintervall eine Schaltanforderungs-Anzeige aktiviert. Nach Beendigung dieser Schaltanforderungs-Anzeige kann dem Fahrer wieder die ursprüngliche Anzeige, die zum Zeitpunkt von der Hochschaltanforderung aktiv war (bspw. dass er sich aktuell im Segelmodus befindet) angezeigt werden. Diese Schaltanforderungs-Anzeige kann identisch einer Anzeige sein, die erscheint, wenn sich das Fahrzeug im Manuellbetrieb befindet und er eine Hochschaltung anfordert und diese umgesetzt wird.

Wie bereits eingangs dargestellt wurde, kann bei einer Rückschaltanforderung des Fahrers während des Segelmodus davon ausgegangen werden, dass er mit einer Verzögerung des Fahrzeugs rechnet bzw. diese sogar erwartet. In diesem Fall wird der Segelmodus verlassen und ggf. gleichzeitig in den Manuellbetrieb des Fahrzeugs gewechselt. Vorteilhalfterweise wird bei einer angeforderten Rückschaltung während des Segelmodus der Segelmodus durch Schließen der Wirkverbindung zwischen Antriebsmotor und Antriebsrädern verlassen und beim Wechsel in den Manuellbetrieb der im Segelmodus virtuell eingelegte Gang beibehalten. Das bedeutet, auch in diesem Fall findet kein Gangwechsel statt, da durch die Beendigung des Segelmodus und der damit verbundenen Wiederherstellung der Wirkverbindung bereits eine Verzögerung des Fahrzeug verursacht wird, die der Fahrer auch bei einer Rückschaltung erwarten würde.

Vorteilhafterweise ist das erfindungsgemäße Verfahren zum Betreiben eines Antriebsstrangs des Kraftfahrzeugs zudem derart ausgestaltet, dass unter der Voraussetzung, dass sich das Fahrzeug bzw. das Getriebe im Manuellbetrieb befindet und dabei bereits der höchste Gang eingelegt ist, bei einer angeforderten Hochschaltung (die nicht umsetzbar ist, da sich das Getriebe bereits im höchsten Gang befindet) der Antriebsstrang in den Segelmodus geschaltet wird. Dadurch soll dem Fahrer das Gefühl vermittelt werden, dass aufgrund seiner Hochschaltanforderung im höchsten Gang die Antriebsstrangsteuerung bzw. Regelung derart verändert wird, wie sie bei einer weiteren Hochschaltung in ähnlicher Weise zu erwarten wäre.

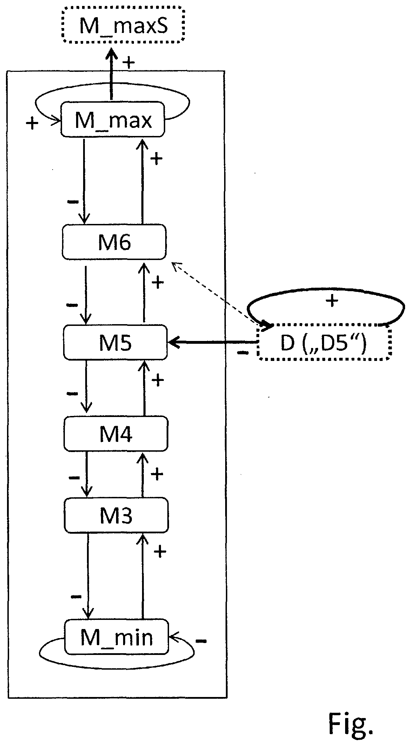

Weitere Merkmale und Vorteile der Erfindung ergeben sich aus der nachfolgenden Beschreibung und der Zeichnung.

Dabei zeigt die einzige Figur eine vereinfachte Darstellung der Schaltlogik bei Fahrzeugen mit Automatikgetriebe, die zumindest in bestimmten Betriebssituationen in einem Segelmodus betrieben werden können. Weiter kann das Automatikgetriebe in einem Automatikbetrieb und in einem Manuellbetrieb betrieben werden, wobei im Automatikbetrieb der Gang automatisch gewechselt wird, und im Manuellbetrieb der Gang vorrangig nur dann gewechselt wird, wenn eine Schaltanforderung des Fahrers detektiert wird. Die Schaltanforderung kann mittels sog. Schaltwippen, die im Bereich des Lenkrads angeordnet sind, vorgenommen werden. Die Schaltwippen können dabei derart ausgestaltet sein, dass bei einem Ziehen einer rechts am Lenkrad angeordneten Schaltwippe eine Hochschaltanforderung ausgelöst wird und bei einem Ziehen einer links am Lenkrad angeordneten Schaltwippe eine Rückschaltung angefordert wird.

Grundsätzlich ist bereits bekannt, dass der Fahrer eines Fahrzeugs, wie es oben definiert ist, bei Betätigung der am Lenkrad angeordneten Schaltwippen - unabhängig davon, ob sich das Fahrzeug bereits im Manuellbetrieb befindet, oder erst aufgrund der Schaltanforderung in den Manuellbetrieb wechselt - ein Hochschalten oder Zurückschalten anfordern kann.

Die Figur zeigt nun im Feld 1 die Schaltstrategie im Manuellbetrieb des Fahrzeugs, wobei die einzelnen Felder M_min bis M_max einen aktuell eingelegten Gang im Manuellbetrieb darstellen, und eine Hochschaltung durch ein Plus +, und eine Rückschaltung durch ein Minus - gekennzeichnet ist. Zieht der Fahrer bspw. im 4. Gang M4 die rechts am Lenkrad angeordnete Schaltwippe, und bringt damit zu Ausdruck, dass er ein Hochschalten wünscht, wird von 4. Gang M4 in den nächsthöheren 5. Gang M5 geschaltet (Wechsel von M4 entlang dem Pfad + nach M5). Zieht der Fahrer im 4. Gang M4 die linke am Lenkrad angeordnete Schaltwippe, und bringt damit zu Ausdruck, dass er ein Rückschalten wünscht, wird von 4. Gang M4 in den nächstniedrigeren 3. Gang M3 geschaltet (Wechsel von M4 entlang dem Pfad - nach M3). Diese Schaltlogik gilt für alle Gänge von M_min bis M_max mit folgender Einschränkung: Wird im niedrigsten Gang M_min die linke am Lenkrad angeordnete Schaltwippe betätigt, und bringt der Fahrer damit zu Ausdruck, dass er ein Rückschalten wünscht, wird - da dies nicht mehr möglich ist - im kleinsten Gang M_min geblieben. Wird im höchsten Gang M_max die rechte am Lenkrad angeordnete Schaltwippe betätigt, und bringt der Fahrer damit zu Ausdruck, dass er ein Hochschalten wünscht, war es bisher so, dass kein Gangwechsel vorgenommen wurde (da kein Hochschalten möglich ist) und in diesem Gang geblieben wurde.

Unter Berücksichtigung des erfindungsgemäßen Verfahrens erfolgt jedoch bei einer Hochschaltanforderung im höchsten Gang M_max zwar auch kein Schaltvorgang, da ein Hochschalten nicht mehr möglich ist, allerdings wird hier automatisch die Kupplung geöffnet und somit die Wirkverbindung zwischen Antriebsmotor und Antriebsrädern unterbrochen, d. h. es wird in den Segelmodus des Antriebsstrangs gewechselt. Dieser Segelmodus ist in der Fig. durch das über dem Feld 1 dargestellte punktierte Feld M_maxS gekennzeichnet. Ein Wechsel in den Segelmodus wird jedoch nur dann vorgenommen, wenn auch die übrigen Bedingungen, die einen Wechsel in den Segelmodus zulassen, erfüllt sind. In diesem Beispiel ist ein Wechsel in den Segelmodus dann zugelassen, wenn zum Zeitpunkt der Hochschaltanforderung im höchsten Gang M_max weder das Gaspedal, noch das Bremspedal betätigt wird.

Trotz unterbrochener Wirkverbindung wird weiterhin der aufgrund vorliegender Betriebsbedingungen optimale Gang ermittelt und ggf. in diesen geschaltet, so dass bei einer Beendigung des Segelmodus (z. B. durch Betätigung des Gaspedals oder Bremspedals in einem vorgegebenem Maße) bereits der für diesen Betriebszustand des Fahrzeugs optimale Gang eingelegt ist.

Ein weiterer wesentlicher Punkt in der Schaltlogik gemäß der Erfindung ist der Wechsel aus dem Segelmodus bei einer vom Fahrer mittels des Schaltpaddels angeforderten Schaltanforderung. Befindet sich das Fahrzeug aktuell im Segelmodus mit virtuell eingelegtem 5. Gang (die Wirkverbindung zwischen Antriebsmotor und Antriebsrädern ist unterbrochen, so dass der eingelegte Gang wirkungslos ist), was in der Fig. mit dem punktierte Feld D ("D5") gekennzeichnet ist, und zieht der Fahrer die rechts am Lenkrad angeordnete Schaltwippe, und bringt damit zu Ausdruck, dass er ein Hochschalten wünscht, wird der Segelmodus trotzdem aufrechterhalten, solange keine sonstige Segelmodus-Abbruchbedingung vorliegt. Um den Fahrer darüber zu informieren, dass seine Hochschaltanforderung registriert wurde, wird zumindest kurzzeitig eine dafür vorgesehene Schaltanforderungs-Anzeige aktiviert. Im vorliegenden Beispiel wird diejenige Anzeige aktiviert, die der Fahrer erhalten würde, wenn die Hochschaltanforderung umgesetzt werden würde und das Getriebe in den Manuellbetrieb in den nächsthöheren Gang schalten würde. Diese Aktivierung der Anzeige ist durch den gestrichelt dargestellten Pfeil vom Segelmodus D("D5") nach M6 gekennzeichnet. Nach Ablauf des vorgegebenen Zeitintervalls, während die Schaltanforderungs-Anzeige aktiv ist, wechselt die Anzeige wieder in eine den Segelmodus kennzeichnenden Anzeige.

Zieht der Fahrer im dargestellten Segelmodus D("D5") die links am Lenkrad angeordnete Schaltwippe, und bringt damit zu Ausdruck, dass er ein Rückschalten wünscht, wird der Segelmodus D("D5") durch Schließen der Kupplung und somit Wiederherstellung der Wirkverbindung zwischen Antriebsmotor und Antriebsrädern verlassen. Eine Rückschaltung aus dem während des Segelmodus eingelegten virtuellen (ab inaktiven) Gang in den nächstniedrigeren Gang wird zu diesem Zeitpunkt nicht vorgenommen, da das Fahrzeug durch das Verlassen des Segelmodus bereits eine Verzögerung erfährt, welche vom Fahrer zu erwarten ist.

Durch das hier dargestellte erfindungsgemäße Verfahren und dessen vorteilhafte Weiterbildungen kann auf einfache und kostengünstige Weise die Akzeptanz eines Segelmodus in Fahrzeugen mit Automatikgetriebe oder automatisierten Getriebe erhöht werden, da der Fahrer bei einer Schaltanforderung während des Segelmodus eine für ihn nachvollziehbare Veränderung der Fahrzeugbewegung (entweder Verzögerung des Fahrzeugs bei Rückschaltanforderung bzw. keine Verzögerung des Fahrzeugs bei Hochschaltanforderung) erfährt.

## Patentansprüche

1. Verfahren zum Betreiben eines Antriebsstrangs eines Kraftfahrzeugs, wobei der Antriebsstrang einen Antriebsmotor und ein zwischen dem Antriebsmotor und den Antriebsrädern geschaltetes automatisches oder automatisiertes Getriebe umfasst,
- wobei das Getriebe in einem Automatikbetrieb automatisch den Gang wechselt, und
- wobei das Getriebe in einem Manuellbetrieb in Abhängigkeit einer vom Fahrer mittels eines Bedienelements angeforderten Hochschaltung oder Zurückschaltung in einen höheren oder niedrigeren Gang wechselt, und
- wobei zumindest im Automatikbetrieb bei Vorliegen definierter Betriebsbedingungen in einen Segelmodus des Antriebsstrangs, in dem die Wirkverbindung zwischen Antriebsmotor und Antriebsrädern getrennt ist, geschaltet wird, und
- wobei der Segelmodus bei einer vom Fahrer angeforderten Rückschaltung verlassen und in den Manuellbetrieb des Getriebes geschaltet wird,
**dadurch gekennzeichnet, dass**
bei einer vom Fahrer angeforderten Hochschaltung (+) während des Segelmodus (D("D5")) der Segelmodus (D("D5")) im Automatikbetrieb aufrechterhalten bleibt.

2. Verfahren nach Anspruch 1, **dadurch gekennzeichnet, dass** bei einer vom Fahrer angeforderten Hochschaltung (+) während des Segelmodus (D("D5")) der Segelmodus (D("D5")) im Automatikbetrieb aufrechterhalten bleibt, wenn die Hochschaltanforderung (+) mittels eines im Bereich des Lenkrads angeordneten Bedienelements erfolgt.

3. Verfahren nach Anspruch 1 oder 2, **dadurch gekennzeichnet, dass** bei einer angeforderten Hochschaltung (+) während des Segelmodus (D("D5")) und einem Verbleib im Segelmodus (D("D5")) zumindest für ein vorgegebenes Zeitintervall eine Schaltanforderungs-Anzeige (M6) aktiviert wird.

4. Verfahren nach einem der vorangegangenen Ansprüche, **dadurch gekennzeichnet, dass** bei einer angeforderten Rückschaltung (-) während des Segelmodus (D("D5")) der Segelmodus (D("D5")) durch Schließen der Wirkverbindung zwischen Antriebsmotor und Antriebsrädern verlassen wird.

5. Verfahren nach Anspruch 4, **dadurch gekennzeichnet, dass** beim Verlassen des Segelmodus (D("D5")) aufgrund einer angeforderten Rückschaltung (-) im Segelmodus (D("D5")) in den Manuellbetrieb (M5) gewechselt wird, und beim Wechsel in den Manuellbetrieb (M5) insbesondere der im Segelmodus (D("D5")) virtuell eingelegte Gang beibehalten wird.

6. Verfahren nach einem der vorangegangenen Ansprüche,
**dadurch gekennzeichnet, dass** bei einer angeforderten Hochschaltung (+) im Manuellbetrieb in den Segelmodus (M_maxS) geschaltet wird, wenn zum Zeitpunkt der angeforderten Hochschaltung (+) der höchste Gang (M_max) eingelegt ist.

## Claims

1. A method for operating a drive train of a motor vehicle, wherein the drive train comprises a drive motor and an automatic or automated transmission which is connected between the drive motor and the drive wheels,
- wherein the transmission automatically changes gear in an automatic mode, and
- wherein the transmission changes into a higher or lower gear in a manual mode subject to a change-up or change-down requested by the driver by means of an operating element, and
- wherein at least in the automatic mode, if defined operating conditions are present, a change is made into a coasting mode of the drive train in which the operative connection between drive motor and drive wheels is disengaged, and
- wherein the coasting mode is exited when the driver requests a change-down and a change is made into the manual mode of the transmission,
**characterised in that**
when the driver wants to change up (+) in the coasting mode (D("D5"), the coasting mode (D("D5") is maintained in the automatic mode.

2. A method according to claim 1, **characterised in that** when the driver wants to change up (+) in the coasting mode (D("D5"), the coasting mode (D("D5") is maintained in the automatic mode when the change-up (+) is requested by means of an operating element arranged in the region of the steering wheel.

3. A method according to claim 1 or claim 2, **characterised in that** when a change-up (+) is requested in the coasting mode (D("D5"), and while remaining in the coasting mode (D("D5") at least for a predetermined time interval, a gear change request display (M6) is activated.

4. A method according to any of the preceding claims, **characterised in that** when a change-down (-) is requested in the coasting mode (D("D5"), the coasting mode (D("D5") is exited by closing the operative connection between drive motor and drive wheels.

5. A method according to claim 4, **characterised in that** on leaving the coasting mode (D("D5") due to a requested change-down (-) in the coasting mode (D("D5"), a change is made into the manual mode (M5), and on changing into the manual mode (M5), the gear which has been virtually engaged in the coasting mode (D("D5") is maintained more especially.

6. A method according to any of the preceding claims,
**characterised in that** when a change-up (+) is requested in the manual operation, a change is made into the coasting mode (M_maxS) when the highest gear (M_max) is engaged at the time of the requested change-up (+).

## Revendications

1. Procédé de gestion de la ligne d'entraînement d'un véhicule automobile, cette ligne d'entraînement comprenant un moteur d'entraînement et une boîte de vitesses automatique ou automatisée branchée entre le moteur d'entraînement et les roues motrices, selon lequel :
- dans un mode de fonctionnement automatique, la boîte de vitesses change automatiquement le rapport de vitesse, et
- dans un mode de fonctionnement manuel, la boîte de vitesses effectue un changement de rapport de vitesse pour enclencher un rapport de vitesse supérieur ou un rapport de vitesse inférieur en fonction d'un changement de vitesse haut ou d'un rétrogradage demandé par le conducteur au moyen d'un élément de manœuvre, et
- au moins en mode de fonctionnement automatique, en présence de conditions de fonctionnement définies, on effectue une commutation dans un mode de navigation de la ligne d'entraînement dans lequel la liaison fonctionnelle entre le moteur d'entraînement et les roues motrices est coupée, et
- le mode de navigation est abandonné en présence d'un rétrogradage demandé par le conducteur et la boîte de vitesses est commutée en mode de fonctionnement manuel,
**caractérisé en ce que**
en présence d'un changement de vitesse haut (+) demandé par le conducteur pendant le mode de navigation (D(« D5 »)), ce mode de navigation (D(« D5 »)) reste maintenu en mode de fonctionnement automatique.

2. Procédé conforme à la revendication 1,
**caractérisé en ce qu'**
en présence d'un changement de vitesse haut (+) demandé par le conducteur pendant le mode de navigation (D(« D5 »)), le mode de navigation (D(« D5 »)) reste maintenu en mode automatique lorsque la demande de changement de vitesse haut (+) s'effectue au moyen d'un élément de manœuvre monté dans la zone du volant de direction.

3. Procédé conforme à la revendication 1 ou 2,
**caractérisé en ce qu'**
en présence d'un changement de vitesse haut (+) demandé pendant le mode de navigation (D(« D5 »)) et d'un maintien du mode de navigation (D(« D5 »)), un indicateur de demande de changement de vitesse (M6) est activé au moins pendant un laps de temps prédéfini.

4. Procédé conforme à l'une des revendications précédentes,
**caractérisé en ce qu'**
en présence d'un rétrogradage (-) demandé pendant le mode de navigation (D(« D5 »)), le mode de navigation (D(« D5 »)) est abandonné en fermant la liaison fonctionnelle entre le moteur d'entraînement et les roues motrices.

5. Procédé conforme à la revendication 4,
**caractérisé en ce que**
lorsque le mode de navigation (D(« D5 »)) est abandonné en raison d'une demande de rétrogradage (-) en mode de navigation (D(« D5 »)), une commutation en mode de fonctionnement manuel (M5) est effectuée, et, lors de la commutation en mode de fonctionnement manuel (M5), en particulier le rapport de vitesse virtuellement enclenché en mode de navigation (D(« D5 »)) est maintenu.

6. Procédé conforme à l'une des revendications précédentes,
**caractérisé en ce qu'**
en présence d'un changement de vitesse haut (+) demandé en mode de fonctionnement manuel, une commutation dans le mode de navigation (M_maxS) est effectuée lorsqu'à l'instant de la demande de changement de vitesse haut (+), le rapport de vitesse le plus élevé (M-max) est enclenché.
